# FASCICULE DE BREVET EUROPEEN

(11) **EP 1 267 531 B1**
(45) Date de publication et mention de la délivrance du brevet: **11.07.2007**
(21) Numéro de dépôt: 02291478.2
(22) Date de dépôt: 13.06.2002
(51) Int. Cl.: H04L 12/56, H04L 12/18, H04L 29/06

(54) **Routeur de signalisation pour l'établissement de sessions multimédias multiparties**
Signalisierungsrouter zum Aufbau von mehrteiligen Multimedia-Sitzungen
Signalling router for establishing multipart multimedia sessions

(30) Priorité: 15.06.2001 FR 0107919
(43) Date de publication de la demande: 18.12.2002
(73) Titulaire: Alcatel Lucent, 75008 Paris (FR)
(72) Inventeur: Couturier, Alban, 92320 Chatillon (FR); Guitton, Francois-Xavier, 44640 Saint Jean de Boiseau (FR); Conte, Alberto, 75014 Paris (FR); Diquelou, Caroline, 44700 Orvault (FR)
(74) Mandataire: Chaffraix, Sylvain

(56) Documents cités:
- WO-A-01/03401

## Description

La présente invention est relative au domaine des télécommunications et plus précisément à la transmission de flux multimédia (notamment audio et vidéo) sur un réseau de données de type internet, c'est-à-dire basé sur les protocoles de la famille IP (*internet Protocol*).

Plus précisément, elles s'appliquent à l'établissement de sessions multimédias multiparties sur de tels réseaux de données.

Les mécanismes de transmission de flux multimédia sur des réseaux de données sont communément appelés des mécanismes de voix sur IP. Le mécanisme connu sous l'acronyme en langue anglaise VoIP *(pour Voice over IP*) est un exemple bien connu de transmission de flux audio sur un réseau de données. Bien que s'appliquant particulièrement à la voix et aux applications de téléphonie, ces mécanismes peuvent être utilisés pour tout autre flux multimédia (vidéo, notamment). Aussi cette terminologie doit être comprise dans un sens élargi.

D'une façon similaire à ce qui est fait dans le cadre d'un réseau téléphonique commuté classique, une session multimédia sur IP peut se décomposer en deux mécanismes : un mécanisme de signalisation et un mécanisme de transmission des flux multimédias.

Le but du mécanisme de signalisation est notamment de permettre la négociation entre les parties de la session afin de permettre la transmission des flux multimédias.

Le brevet WO 01/03401 révèle un système de contrôle de flux multimédias où des routeurs de signalisation relaient des messages de contrôle de session multimédia, comme par exemple des messages d'invitation à joindre une session multimédia. Les routeurs de signalisation y sont connectés à d'autres routeurs de signalisation et/ou à des terminaux.

Un exemple de protocole de signalisation est le protocole SIP (*Session Initiation Protocol*) tel que défini dans le RFC (*Request For Comments*) 2543 de l'IETF (*Internet Engineering Task Force*).

Selon ce protocole, les terminaux peuvent s'échanger des messages afin de créer, contrôler ou terminer une session multimédia. Ces messages transitent par des routeurs de signalisation, classiquement appelés Proxies selon la terminologie en langue anglais.

Chaque terminal du réseau est associé à un routeur de signalisation ou proxy, en charge d'une partie du réseau.

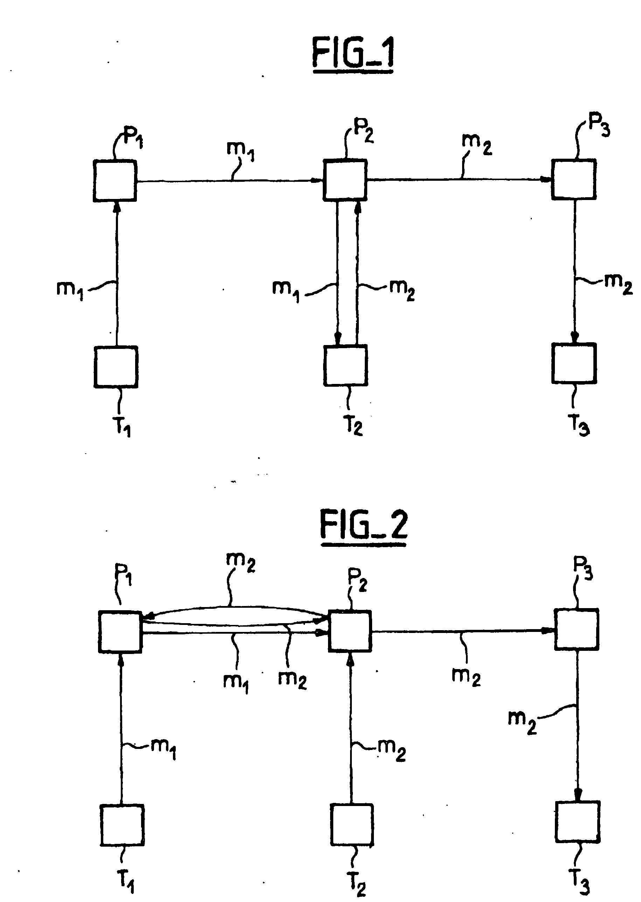

Sur la figure 1, on a représenté 3 terminaux T₁, T₂ et T₃ . Ces terminaux sont associés à 3 routeurs de signalisation, respectivement P₁, P₂ et P₃.

Lorsque le terminal T₁ veut initier une session multimédia avec le terminal T_{2,} il émet un message m₁ à son routeur de signalisation P_{1.} Ce routeur de signalisation la transmet (après éventuelle modification) au routeur de signalisation P_{2,} selon un principe classique du plus court chemin. Le routeur de signalisation P₂ le transmet alors au terminal T_{2.}

Ce message m₁ contient les informations nécessaires pour permettre l'établissement du flux multimédia. Ces informations comportent par exemple le numéro du port du terminal T₁ à utiliser.

Après réponse du terminal T₂ au moyen d'un autre message, ce flux multimédia F₁₂ peut alors s'établir.

Ce modèle pose toutefois un problème dans le cas d'une session multimédia comportant au moins trois parties, communément appelées conférences, et notamment dans le cas de conférences comportant plus de trois parties.

En reprenant l'exemple illustré par la figure 1, le terminal T₂ veut inviter le terminal T₃ dans la même session multimédia afin de créer une conférence à 3 parties. De la même façon que précédemment, le terminal T₂ transmet un message m₂ au routeur de signalisation P₂ auquel il est associé. Celui-ci transmet le message au routeur de signalisation P₃ qui la transmet alors au terminal T_{3.}

De la même façon, le terminal T₁ invite le terminal T₄ dans la même session multimédia, en envoyant un message m₃ au routeur de signalisation P₁ qui le transmet au routeur de signalisation P₄ associé au terminal T₄

Toutefois, à aucun moment les trois messages (m₁ et m₃ provenant du terminal T₁ et m₂ provenant du terminal T₂) ne peuvent être corrélés par un des routeurs de signalisation concernés.

Il s'ensuit que le réseau n'a aucune connaissance qu'une conférence à quatre est en cours. Du point de vue du réseau, il s'agit d'au moins deux sessions multimédias distinctes, et le fait qu'il s'agisse d'une conférence à quatre n'est connu que des terminaux.

Or, certains mécanismes particuliers doivent être mis en oeuvre dès lors qu'une session miltimédia met en jeu plus de deux parties. En particulier, dans le cas de flux audio, il peut s'agir de faire appel à un pont de conférence (en anglais, *conference bridge*) afin de mixer les flux. En effet, afin que l'utilisateur du terminal T₃, par exemple, puisse entendre simultanément les signaux audio provenant des terminaux T₁, T₂ et T₄ (dans le cas où les utilisateurs de ces terminaux parleraient en même temps), il convient de les mixer.

Afin que ces mécanismes particuliers puissent être mis en oeuvre par le réseau, il est nécessaire qu'un élément de ce réseau soit informé qu'une telle conférence est en cours.

Le but de la présente invention est de résoudre ce problème technique. Pour ce faire, l'invention a pour objet un routeur de signalisation comportant des moyens pour recevoir des messages provenant de terminaux ou d'autres routeurs de signalisation, caractérisé en ce qu'il comporte de surcroît des moyens pour corréler un nouveau message avec un message précédemment reçu, et pour transmettre le nouveau message à un routeur de signalisation associé au message précédemment reçu.

Selon une mise en oeuvre de l'invention, la corrélation est réalisée au moyen d'un identificateur de conférence, contenu dans le message.

L'invention et ses avantages vont être maintenant présentés dans une description d'une mise en oeuvre en liaison avec les figures jointes.

La figure 1, déjà commentée, représente un réseau de données permettant la transmission de flux multimédias, conformément à l'état de la technique.

La figure 2 illustre un réseau de données conforme à l'invention.

On a représenté sur cette figure 2, trois terminaux T₁, T₂ et T₃ associés respectivement à trois routeurs de signalisation P₁, P₂ et P₃.

Comme décrit précédemment, ces routeurs de signalisation possèdent des moyens pour recevoir des messages provenant soit des terminaux soit d'autres routeurs de signalisation.

On suppose que le terminal T₁ veut ouvrir une session multimédia avec le terminal T₂. Il envoie donc un message m₁ vers le routeur de signalisation auquel il est associé, P₁, qui à son tour le transmet au routeur de signalisation P₂ qui finalement le transmet au terminal T₂.

Selon une mise en oeuvre de l'invention, les routeurs de signalisation possèdent une mémoire mettant en correspondance des identificateurs de conférence avec des routeurs de signalisation. Ces identificateurs de conférence peuvent être contenus dans le message reçu.

Dans le cas où le protocole SIP (*Session Initiation Protocol*) est utilisé pour véhiculer les messages, ces identificateurs de conférence peuvent par exemple être le champ « Call ID ».

Lorsque le routeur P₂ reçoit le message provenant du routeur P₁, il vérifie qu'il n'existe pas déjà une ligne dans cette mémoire comportant un identificateur de conférence égal à celui du message reçu. Si tel n'est pas le cas, alors il ajoute une ligne mettant en correspondance la valeur de cet identificateur de conférence avec le routeur de signalisation d'où provient le message, c'est-à-dire le routeur de signalisation P₁.

Ce routeur de signalisation P₁ peut alors être considéré (par le routeur de signalisation P₂) comme associé à la conférence correspondant à l'identificateur de signalisation.

Lorsque le terminal T₂ souhaite inviter dans la conférence le terminal T₃, il émet un message m₂ à destination du routeur de signalisation auquel il est associé, c'est-à-dire le routeur de signalisation P₂. Ce message contient un identificateur de conférence identique à celui évoqué précédemment.

A la réception du message, le routeur de signalisation P₂ est en mesure de corréler ce message avec le message précédemment reçu du routeur de signalisation P₁ (puisqu'ils ont le même identificateur de conférence). Cette corrélation peut être effectuée comme indiqué précédemment, au moyen d'une mémoire mettant en correspondance des identificateurs de conférence avec des routeurs de signalisation associés.

Le routeur de signalisation P₂ considère donc le routeur de signalisation P₁ comme le routeur de signalisation associé à ce nouveau message, et le lui transmet.

Il s'ensuit que le routeur de signalisation P₁ a la connaissance qu'il s'agit d'une conférence à 3, et non pas de deux sessions multimédias biparties. Il peut alors mettre en oeuvre des mécanismes appropriés.

Dans le cas où la session multimédia en question met en jeu la transmission de flux audio, le routeur de signalisation P₁ peut contrôler un pont de conférence (ou *Conference bridge*, en langue anglaise) et indiquer aux différents terminaux mis en jeu, T₁, T₂ et T₃ de se connecter à ce pont de conférence.

Le pont de conférence a par exemple la charge de faire du mixage de flux. Lorsque les utilisateurs de deux terminaux parlent en même temps, le mixage de flux permet à l'utilisateur du troisième terminal d'entendre les deux voix simultanément.

Le routeur de signalisation P₁ peut alors renvoyer le message m₂ vers le routeur de signalisation P₂ qui, à sont tour, le transmet vers le routeur de signalisation P₃. Celui-ci peut alors le transmettre au terminal invité, c'est-à-dire au terminal T₃.

Classiquement, les routeurs de signalisation possèdent des dispositifs de détection de boucles : à la réception d'un message déjà reçue, celui-ci est automatiquement détruit.

Selon une mise en oeuvre particulière de l'invention, il convient toutefois ici de modifier ce dispositif de détection de boucle pour que le message ne soit pas détruit lors de sa deuxième présentation.

Il est possible de conserver un mécanisme de détection de boucles prévu pour détruire les messages reçus pour au moins la troisième fois.

## Revendications

1. Routeur de signalisation comportant des moyens pour recevoir des messages d'invitation à conférence (m₁, m₂) provenant de terminaux (T₁, T₂, T₃) ou d'autres routeurs de signalisation (P₁, P₂, P₃), **caractérisé en ce qu**'il comporte de surcroît des moyens pour corréler un nouveau message d'invitation à conférence avec un message d'invitation à conférence précédemment reçu, et pour transmettre ledit nouveau message d'invitation à conférence à un routeur de signalisation associé audit message d'invitation à conférence précédemment reçu.

2. Routeur de signalisation selon la revendication précédente, dans lequel la corrélation est réalisée au moyen d'un identificateur de conférence, contenu dans ledit nouveau message d'invitation à conférence.

3. Routeur de signalisation selon l'une des revendications précédentes, comportant de surcroît des moyens pour, lorsque le nouveau message d'invitation à conférence provient d'un autre routeur de signalisation et qu'il ne peut pas être corrélé avec un message d'invitation à conférence d'invitation à conférence précédemment reçu, considérer ledit autre routeur de signalisation comme routeur de signalisation associé audit nouveau message d'invitation à conférence.

4. Routeur de signalisation selon l'une des revendications précédentes, dans lequel un dispositif de détection de boucles est mis en oeuvre et est prévu pour ne pas supprimer un message d'invitation à conférence lors de ses deux premières présentations.

5. Routeur de signalisation selon la revendication 2 dans lequel les messages d'invitation à conférence sont conformes au protocole SIP, et les identificateurs de conférences sont le champ « Call Id » desdits messages d'invitation à conférence .

6. Routeur de signalisation selon l'une des revendications précédentes, disposant de surcroît de moyens pour contrôler un pont de conférence.

## Claims

1. A signaling router having means for receiving conference-invitation messages (m₁, m₂) coming from terminals (T₁, T₂, T₃) or from other signaling routers (P₁, P₂, P₃), the router being **characterized in that** it further comprises means for correlating a new conference-invitation message with a previously received conference-invitation message, and for forwarding said new conference-invitation message to a signaling router associated with said previously received conference-invitation message.

2. A signaling router according to the preceding claim, in which the correlation is established by means of a conference identifier contained in said new conference-invitation message.

3. A signaling router according to any preceding claim, further comprising means operative, when the new conference-invitation message comes from another signaling router and when it is not correlated with a previously received conference-invitation message, to consider that said other signaling router is the signaling router associated with said new conference-invitation message.

4. A signaling router according to any preceding claim, in which loop detection means are implemented and provision is made to avoid deleting a conference-invitation message on the first two occasions it is presented.

5. A signaling router according to claim 2, in which conference-invitation messages comply with the SIP protocol, and conference identifiers are constituted by the "call ID" fields of said conference-invitation messages.

6. A signaling router according to any preceding claim, further comprising means for controlling a conference bridge.

## Patentansprüche

1. Signalisierungsrouter, der Mittel zum Empfangen von Aufrufsmeldungen zu einer Konferenz (m₁, m₂) enthält, die von Endgeräten (T₁, T₂, T₃) oder anderen Signalisierungsroutern (P₁, P₂, P₃) herkommen, **dadurch gekennzeichnet, dass** er außerdem Mittel einschließt zum Korrelieren einer neuen Aufrufsmeldung zu einer Konferenz mit einer zuvor empfangenen Aufrufsmeldung zu einer Konferenz und zum Übertragen dieser neuen Aufrufsmeldung zu einer Konferenz an einen Signalisierungsrouter, der mit dieser zuvor empfangenen Aufrufsmeldung zu einer Konferenz verknüpft ist.

2. Signalisierungsrouter gemäß dem vorstehenden Anspruch, bei dem die Korrelation mittels einer Konferenzkennung erfolgt, die in dieser neuen Aufrufsmeldung zu einer Konferenz enthalten ist.

3. Signalisierungsrouter gemäß einem der vorstehenden Ansprüche, der außerdem Mittel enthält, um wenn die neue Aufrufsmeldung zu einer Konferenz von einem anderen Signalisierungsrouter stammt und sie nicht mit einer zuvor empfangenen Aufrufsmeldung zu einer Konferenz korreliert werden kann, diesen anderen Signalisierungsrouter als Signalisierungsrouter zu betrachten, der mit dieser neuen Aufrufsmeldung zu einer Konferenz verknüpft ist.

4. Signalisierungsrouter gemäß einem der vorstehenden Ansprüche, bei dem eine Vorrichtung zur Erfassung von Schleifen eingesetzt wird, die dafür vorgesehen ist, eine Aufrufsmeldung zu einer Konferenz bei ihrer zweimaligen Erstanzeige nicht zu löschen.

5. Signalisierungsrouter gemäß Anspruch 2, bei dem die Aufrufsmeldungen zu einer Konferenz dem Protokoll SIP entsprechen und die Konferenzkennungen das Feld "Call Id" dieser Meldungen sind.

6. Signalisierungsrouter gemäß einem der vorstehenden Ansprüche, der außerdem über Mittel zur Steuerung einer Konferenzbrücke verfügt.
